# EUROPEAN PATENT APPLICATION

(11) **EP 4 439 707 A1**
(43) Date of publication of application: **02.10.2024**
(21) Application number: 23209064.7
(22) Date of filing: 10.11.2023
(51) Int. Cl.: H01M 4/136, H01M 4/1397

(54) **POSITIVE ELECTRODE MATERIAL AND PREPARATION METHOD THEREOF, POSITIVE ELECTRODE SHEET, LITHIUM ION BATTERY AND LITHIUM ION BATTERY PACK**

(30) Priority: 31.03.2023 CN 202310342978
(71) Applicant: AESC Japan Ltd., Kanagawa, 2520012 (JP)
(72) Inventor: MO, Fangjie, Pudong New Area Shanghai, 201315 (CN)
(74) Representative: Becker, Eberhard

(57) **Abstract**

A positive electrode material is provided, which includes: lithium manganese iron phosphate and carbon, the carbon is coated on the surface of the particle of the lithium manganese iron phosphate; the carbon accounts for 1.4% to 4.7% of the total mass of the positive electrode material. A preparation method of positive electrode material includes the following steps: after mixing and drying carbon source, manganese source, lithium source, iron source, doping element and phosphorus source, performing pre-sintering and pre-fusion at the first stage temperature, then increasing the temperature to the second stage temperature to continue sintering to obtain the positive electrode material. A positive electrode sheet is further provided, and a raw material for preparing the positive electrode sheet includes the positive electrode material described above.

## Description

### BACKGROUND

### Technical Field

The disclosure relates to the technical field of lithium ion batteries, in particular to a positive electrode material, a preparation method thereof, and a positive electrode sheet.

### Description of Related Art

Lithium-ion batteries have been favored in various technical fields due to their advantages such as high energy density, stable discharge voltage, and long working life since they were developed. In the meantime, lithium-ion batteries are commonly adopted in portable energy storage tools especially in the currently popular new energy automobile industry worldwide. As an important part of lithium-ion batteries, the selection of positive electrode materials will directly affect the performance of lithium-ion batteries. The positive electrode materials mainly include lithium cobaltate, lithium manganate, lithium iron phosphate, etc. Lithium iron phosphate has the advantages of good structural stability, good thermal stability, good safety performance, good cycle life, and rich sources of raw materials, and therefore are adopted more commonly in the fields of energy storage batteries and electric vehicle batteries. However, the voltage plateau of lithium iron phosphate is only 3.4V vs. Li/Li+, which limits the energy density of lithium ironz phosphate. Lithium iron phosphate has the same olivine structure as lithium iron phosphate, and has a higher voltage plateau than lithium iron phosphate.

However, the electronic conductivity of lithium manganese iron phosphate is poor, and the charge and discharge polarization is high. At present, the electronic conductivity of lithium manganese phosphate is mainly modified by coating carbon materials to improve the rate performance of lithium manganese iron phosphate and improve the polarization. However, there are several major technical problems in carbon coating: first, the carbon content of the coating is high, which will reduce the compaction of the material due to the high specific surface area of carbon; secondly, the coating efficiency is limited, and the material cannot be well protected, and the main performance shows that the high-temperature cycle life is limited. Therefore, the preparation of a lithium manganese iron phosphate material with low carbon content, good coating effect and good stability is of great significance to the research and development of electrochemical devices.

### SUMMARY

In view of the above-mentioned shortcoming of the related art, the purpose of the disclosure is described as follows.

In the first aspect, a positive electrode material is provided, and the key element of which includes: lithium manganese iron phosphate, the chemical formula thereof is LiₐMnₓFe_{1-x-y}M_{y}PO₄, wherein 0.9≤a≤1.10, 0≤x≤1.0, 0≤y≤0.02, 0.5≤x/(1-x-y)≤0.9, M is doped element and selected from one or more of Ti, Mg, Ni, Co, Al, V, Cr, Zr, and Nb; carbon, which is coated on the surface of a particle of the lithium manganese iron phosphate; the carbon accounts for 1.4% to 4.7% of the total mass of the positive electrode material.

In combination with the first aspect, in an implementation, the carbon is coated on the surface of the particle of the lithium manganese iron phosphate, and a core body composed of lithium manganese iron phosphate, a fusion layer of lithium manganese iron phosphate fused with carbon, and a coating layer composed of carbon are formed from the inside out.

With reference to the first aspect, in an implementation, the thickness ratio of the fusion layer to the coating layer is (10-15):(5-10).

In combination with the first aspect, in an implementation, the proportion of carbon at a first depth from the surface of the coating layer is 1.2%≤W1≤2.3%, and the first depth is within the range of the fusion layer.

In combination with the first aspect, in an implementation, the proportion of carbon at a second depth from the surface of the coating layer is 0.8%≤W2≤1.8%, and the second depth is within the range of the fusion layer, the second depth is greater than the first depth.

In combination with the first aspect, in an implementation, the ratio of the proportion of carbon at the first depth from the surface of the coating layer to the proportion of carbon at the second depth is 1.05≤W1/W2≤1.8.

In combination with the first aspect, in an implementation, the first depth is a segment between 5nm and 20nm from the surface of the coating layer.

In combination with the first aspect, in an implementation, the second depth is a segment between 90nm and 100nm from the surface of the coating layer.

In combination with the first aspect, in an implementation, the metal exposure rate Pₘₑ after the surface of the particle of the lithium manganese iron phosphate is coated with carbon is 68%≤Pₘₑ≤88%, and the metal exposure rate Pₘₑ= nₘₑ/nₜₒₗ, wherein nₘₑ is the total molar amount of all metal elements at the surface of the particle of the lithium manganese iron phosphate, wherein nₜₒₗ is the total molar amount of all elements at the surface of the particle of the lithium manganese iron phosphate.

In the second aspect, a method for preparing positive electrode material is provided, the key of preparing the positive electrode material is that, after mixing and drying carbon source, manganese source, lithium source, iron source, doping element and phosphorus source, performing pre-sintering and pre-fusion at the first stage temperature, then increase the temperature to the second stage temperature to continue sintering to obtain the positive electrode material; and/or the first stage temperature is 300-500°C, and the pre-sintering time is 10-20 hours; and/or the second stage temperature is 500-650°C, and the sintering time is 10-20 hours.

In combination with the second aspect, in an implementation, the carbon source is selected from one or more of glucose, fructose, polyethylene glycol, and sucrose; and/or the manganese source is one or more of manganese sulfate, manganese nitrate, manganese chloride; and/or the iron source is one or more of ferric nitrate and ferric chloride; and/or the phosphorus source is one or more of ammonium dihydrogen phosphate and diammonium hydrogen phosphate; and/or the doping element is selected from the sulfate, nitrate or chloride salt of the corresponding doping element; and/or the lithium source material is lithium carbonate.

In the third aspect, a positive electrode sheet is provided, the key of which is that the raw material for preparation includes the positive electrode material described in any one of the above-mentioned first and second aspects.

As mentioned above, a positive electrode material and an electrochemical device of the present disclosure at least include the following advantageous effects: the carbon content of the positive electrode material is 1.4% to 4.7%, which is lower than the carbon content in general positive electrode materials, but the coating effect is good, and the application of such positive electrode material in electrode sheets and batteries may exhibit improved electrical performance.

### BRIEF DESCRIPTION OF THE DRAWINGS

FIG. 1 is a schematic diagram showing a layered structure which is formed by coating carbon on the surface of the particle of lithium manganese iron phosphate according to the present disclosure.
FIG. 2 is a comparison chart showing comparison of cycle life curves under 45°C between Example 1 and Comparative Examples 1 and 2 of the present disclosure.

### DESCRIPTION OF THE EMBODIMENTS

Embodiments of the present disclosure are described below through specific examples, and those skilled in the art can easily understand other advantages and effects of the present disclosure from the content disclosed in this specification. The present disclosure can also be implemented or applied through other different specific implementation modes, and various modifications or changes can be made to the details in this specification based on different viewpoints and applications without departing from the spirit of the present disclosure. It should be understood that the preferred embodiments are only for illustrating the present disclosure, but not for limiting the protection scope of the present disclosure.

It should be noted that: the term "coating" refers to using other materials to form a uniform and thin layer structure capable of covering the active material on the surface of the active material. And the term "carbon coating" refers to coating a layer of carbon film on the surface of the active material, so that a carbide layer with high strength, high conductivity and high corrosion resistance is formed on the surface of the active material.

A part of an embodiment of the present disclosure provides a positive electrode material, which includes lithium manganese iron phosphate and carbon, the chemical formula of the lithium manganese iron phosphate is LiₐMnₓFe_{1-x-y}M_{y}PO₄, wherein 0.9≤a≤1.10, 0≤x≤1.0, 0≤y ≤0.02, 0.5≤x/(1-x-y)≤0.9, the M is a doping element and is selected from one or more of Ti, Mg, Ni, Co, Al, V, Cr, Zr, Nb. The carbon is coated on the surface of the particle of the lithium manganese iron phosphate; and the carbon accounts for 1.4%-4.7% of the total mass of the positive electrode material.

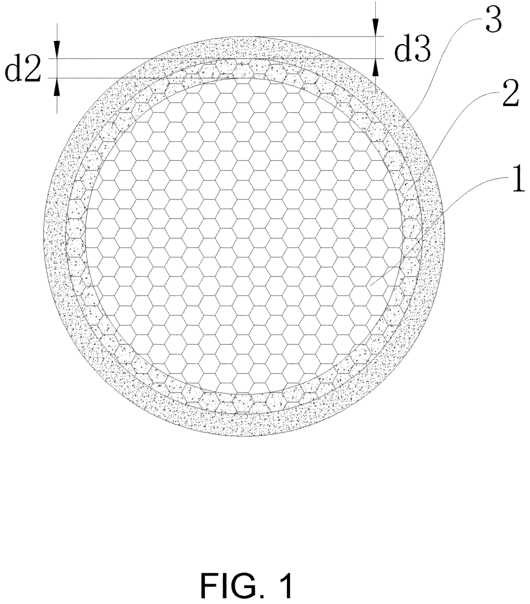

Please refer to FIG. 1. The carbon is coated on the surface of the particle of the lithium manganese iron phosphate, and a core body d1 composed of lithium manganese iron phosphate, a fusion layer d2 of lithium manganese iron phosphate fused with carbon, and a coating layer d3 composed of carbon are formed from the inside out. The thickness ratio of the fusion layer d2 to the coating layer d3 is (10-15):(5-10). Within the range of the fusion layer, the proportion of carbon in the fusion layer gradually increases from the core body to a distance away from the core body along the thickness direction.

In some embodiments, the proportion of carbon gradually increases, specifically, the proportion of carbon at the first depth from the surface of the coating layer is 1.2%≤W1≤2.3%, and the first depth is located within the range of the fusion layer. The proportion of carbon at a second depth from the surface of the coating layer is 0.8%≤W2≤1.8%, and the second depth is located within the range of the fusion layer, and the second depth is greater than the first depth. The proportion of carbon here refers to the local carbon content in a certain depth range measured by the etching-XPS test method. The proportion distribution of carbon in the fusion layer may reflect the penetration depth of carbon into the particle of lithium iron manganese phosphate. The better the fusion effect of carbon and lithium iron manganese phosphate, the higher the electrical performance. Therefore, by controlling the distribution of carbon content in the fusion layer, it is possible to control the electrical performance of the positive electrode material.

In order to make the coating effect better and the cycle life higher, in some embodiments, the ratio of the carbon proportion of the first depth and the second depth is further limited, specifically: the ratio of the proportion of carbon at the first depth from the surface of the coating layer to the proportion of carbon at the second depth is 1.05≤W1/W2≤1.8.

In a specific implementation, based on the thickness ratio of the fusion layer d2 and the coating layer d3 being (10~15):(5~10), the first depth is preferably a segment between 5nm and 20nm from the surface of the coating layer. The second depth is preferably a segment between 90nm and 100nm from the surface of the coating layer.

In addition, in some embodiments, in order to improve the performance of the positive electrode material, the effect of carbon coating is further demanded. Specifically, the metal exposure rate Pₘₑ after the surface of the particle of the lithium iron manganese phosphate is coated with carbon is 68%≤Pₘₑ≤ 88%, the metal exposure rate Pₘₑ= nₘₑ/nₜₒₗ, wherein nₘₑ is the total molar amount of all metal elements at the surface of the particle of the lithium iron manganese phosphate, where the metal elements include transition metal elements, and wherein nₜₒₗ is the total molar amount of all elements at the surface of the particle of the lithium iron manganese phosphate. It should be noted that the contents of C, Fe, and Mn at the surface of the particle of the lithium iron manganese phosphate are measured by the EDS method, and the molar amount of the surface (Fe+Mn) is divided by the total molar amount of the surface C, Fe, and Mn to obtain the metal exposure rate.

A part of an embodiment of the present disclosure provides a preparation method of a positive electrode material. Carbon source, manganese source, lithium source, iron source, doping element and phosphorus source are mixed and dried, and then pre-sintered at a temperature of 300-500°C for 10-20 hours for pre-fusion. Then the temperature is raised to 500-650°C, and the sintering is continued for 10-20 hours to obtain the positive electrode material.

It should be noted that the pre-sintering temperature is of great significance to the pre-fusion of carbon sources, and pre-sintering may improve the quality of carbon material coating and increase the penetration depth. If the pre-sintering temperature is too low, the fusion effect between the carbon source and other raw materials will not be favourable; if the pre-sintering temperature is too high, the carbon source will be carbonized in advance, and the effect of pre-fusion will not be achieved; in both cases, the electrical performance will be deteriorated. The sintering temperature is of great significance to the carbon coating effect. If the sintering temperature is too low, the cracking of the carbon source is insufficient, and the amorphous carbon coating cannot be completely formed; if the temperature is too high, the carbon source will volatilize, and the fusion effect between the carbon source and the main material will be deteriorated; in both cases, the electrical performance will be deteriorated. Therefore, it is necessary to choose a suitable sintering temperature.

In some embodiments, the carbon source is selected from one or more of glucose, fructose, polyethylene glycol, and sucrose. It should be noted that the carbon source is not limited to one or more of glucose, fructose, polyethylene glycol, and sucrose, and other organic carbon sources may also be adopted. Compared with inorganic carbon sources, the pre-fusion effect of organic carbon sources is better.

In some embodiments, the manganese source is one or more of manganese sulfate, manganese nitrate, and manganese chloride.

In some embodiments, the iron source is one or more of ferric nitrate and ferric chloride.

In some embodiments, the phosphorus source is one or more of ammonium dihydrogen phosphate and diammonium hydrogen phosphate.

In some embodiments, the doping element is selected from sulfate, nitrate or chloride salts of the corresponding doping elements.

In some embodiments, the lithium source material is lithium carbonate.

A part of an embodiment of the present disclosure provides a positive electrode sheet, and the preparation raw material of which includes the above positive electrode material.

In some embodiments, the preparation method of the positive electrode sheet includes mixing the positive electrode material in part of any embodiment with a conductive agent Super P and a binder polyvinylidene fluoride (PVDF) according to a weight ratio of 97:1.5:1.5, adding a solvent N-methylpyrrolidone (NMP), stirring and mixing the mixture thoroughly to obtain the positive electrode slurry; coating the positive electrode slurry on the aluminum foil of the positive electrode current collector, and finally obtaining the positive electrode sheet through drying, cold pressing, slitting and other processes.

### Examples 1~8 and Comparative Examples 1~10

I. According to various embodiments in Table 1, the positive electrode sheet prepared by using different parameters of the positive electrode material was laminated with the same isolation film and negative electrode sheet respectively, so that the isolation film was in the middle of the positive and negative electrode sheets to serve the function of isolation. Then the aluminum-plastic film covered the outside, and after drying, the same electrolyte solution is injected respectively. After packaging, standing, and chemical processes, soft-pack batteries with a capacity of 1Ah were finally prepared respectively.

**Table 1 Parameters of positive electrode material are adopted in Examples 1~8**

| | Pₘₑ (%) | W1 (%) | W2 (%) | W1/W2 (%) |
|---|---|---|---|---|
| Example 1 | 86 | 1.2 | 0.8 | 1.50 |
| Example 2 | 83 | 1.2 | 1.1 | 1.09 |
| Example 3 | 79 | 1.7 | 1.0 | 1.70 |
| Example 4 | 76 | 1.8 | 1.3 | 1.38 |
| Example 5 | 73 | 1.7 | 1.6 | 1.06 |
| Example 6 | 71 | 2.3 | 1.3 | 1.77 |
| Example 7 | 70 | 2.1 | 1.5 | 1.40 |
| Example 8 | 68 | 2.2 | 1.7 | 1.29 |

II. According to the comparative examples in Table 2, the positive electrode sheets prepared by using different parameters of positive electrode materials are respectively laminated with the same isolation film and negative electrode sheet, so that the isolation film is in the middle of the positive and negative electrode sheets to serve the function of isolation. Then the aluminum-plastic film covered the outside, and after drying, the same electrolyte solution is injected respectively. After packaging, standing, and chemical processes, soft-pack batteries with a capacity of 1Ah were finally prepared respectively.

**Table 2 The parameters of positive electrode materials adopted in Comparative Examples 1~10**

| | Pₘₑ (%) | W1 (%) | W2 (%) | W1/W2 (%) |
|---|---|---|---|---|
| Comparative Example 1 | 96 | 1.1 | 0.6 | 1.83 |
| Comparative Example 2 | 91 | 2.5 | 0.7 | 3.57 |
| Comparative Example 3 | 63 | 3.8 | 1.9 | 2.00 |
| Comparative Example 4 | 89 | 1.1 | **0.9** | **1.22** |
| Comparative Example 5 | 90 | **1.2** | 0.7 | **1.71** |
| Comparative Example 6 | **73** | **1.9** | **0.9** | 2.11 |
| Comparative Example 7 | 96 | **1.7** | 0.4 | 4.25 |
| Comparative Example 8 | 62 | 2.6 | **1.5** | **1.73** |
| Comparative Example 9 | 61 | 2.5 | **1.7** | **1.47** |
| Comparative Example 10 | 56 | 3.1 | 2.3 | 1.35 |

III. Test method Gram capacity test, DCR test, cycle test were performed respectively on the batteries obtained from Examples and Comparative Examples provided above
1. Gram capacity test method: Within the range of 2.5-4.2V, charge and discharge were performed for 3 cycles at 0.33C at 25°C, the discharge capacity of the third cycle was divided by the total mass of the positive active material, thus obtaining the gram capacity of the positive electrode.
2. DCR test method: Charge and discharge were performed for 3 cycles at 0.33C at 25°C, the discharge capacity of the third cycle was 100% of the capacity of the cell, and then the capacity of the cell was adjusted to 70% at 0.33C, that is, 70% SoC; discharge were performed at a current density of 4C for 30s, and the voltage difference before and after discharge was divided by the discharge current, and the result was 70% SoC DCR.
3. Cycle test method: Within the range of 2.5-4.2V, charge and discharge were performed at 45°C at 1C until the remaining capacity was 80% of the initial capacity, the number of cycles is the cycle life of the material.
IV. Test results

The test results of various Examples are shown in Table 3:

**Table 3 Test results of Examples 1~8**

| | Pₘₑ (%) | W1 (%) | W2 (%) | W1/W2 (%) | Gram capacity (mAh/g) | 70% SoC DCR (millio hms) | Cycle life at 45°C (number of times) |
|---|---|---|---|---|---|---|---|
| Example 1 | 86 | 1.2 | 0.8 | 1.50 | 146 | 116 | 850 |
| Example 2 | 83 | 1.2 | 1.1 | 1.09 | 145 | 117 | **1030** |
| Example 3 | 79 | 1.7 | 1.0 | 1.70 | 144 | 122 | 880 |
| Example 4 | 76 | 1.8 | 1.3 | 1.38 | 148 | 119 | 930 |
| Example 5 | 73 | 1.7 | 1.6 | 1.06 | 145 | 112 | 960 |
| Example 6 | 71 | 2.3 | 1.3 | 1.77 | 142 | 121 | 950 |
| Example 7 | 70 | 2.1 | 1.5 | 1.40 | 146 | 117 | **1010** |
| Example 8 | 68 | 2.2 | 1.7 | 1.29 | 147 | 112 | **1060** |

| | Pₘₑ (%) | W1 (%) | W2 (%) | W1/W2 (%) | Gram capacity (mAh/g) | 70%S oC DCR (millio hms) | Cycle life at 45°C (number of times) |
|---|---|---|---|---|---|---|---|
| Compara -tive Example 1 | 96 | 1.1 | 0.6 | 1.83 | 126 | 142 | 460 |
| Compara -tive Example 2 | 91 | 2.5 | 0.7 | 3.57 | 124 | 141 | 370 |
| Compara -tive Example 3 | 63 | 3.8 | 1.9 | 2.00 | 122 | 145 | 420 |
| Compara -tive Example | 89 | 1.1 | **0.9** | **1.22** | 134 | 136 | 620 |
| 4 | | | | | | | |
| Compara -tive Example 5 | 90 | **1.2** | 0.7 | **1.71** | 132 | 138 | 600 |
| Compara -tive Example 6 | **73** | **1.9** | **0.9** | 2.11 | **137** | **133** | **670** |
| Compara -tive Example 7 | 96 | **1.7** | 0.4 | 4.25 | 128 | 140 | 530 |
| Compara -tive Example 8 | 62 | 2.6 | **1.5** | **1.73** | 130 | 141 | 560 |
| Compara -tive Example 9 | 61 | 2.5 | **1.7** | **1.47** | 131 | 142 | 520 |
| Compara -tive Example 10 | 56 | 3.1 | 2.3 | 1.35 | 129 | 147 | 440 |

### Description of results:

1. In Examples 1 to 8, the gram capacity exceeded 140 mAh/g; most of the DCR results were lower than 120, and a few of them exceeded 120; while the cycle life reached more than 800 number of times in average, most of them exceeded 900 number of times, and some of them even exceeded 1000 number of times.

### 2. Comparative Examples 1 ~3 are compared with Examples 1~8:

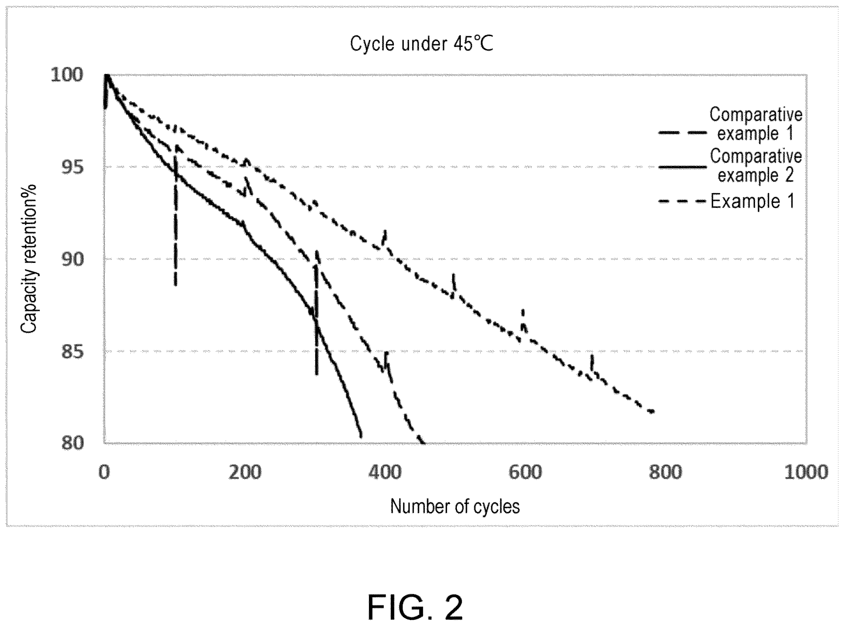

FIG. 2 shows the comparison chart showing comparison of cycle life curves under 45°C between Example 1 and Comparative Examples 1 and 2: the capacity of Comparative Examples 1 and 2 decreased faster and faster, while the capacity of Example 1 decreased in a stable manner.

In Comparative Examples 1 and 3, metal exposure rate Pₘₑ, proportion of carbon at the first depth (hereinafter referred to as W1), proportion of carbon at the second depth (hereinafter referred to as W2), and the ratio (hereinafter referred to as W1/W2) of the proportion of carbon at the first depth to the proportion of carbon at the second depth are not in the preferred range of the present disclosure. The gram capacity does not exceed 130, the DCR is higher than 140 and the cycle life is lower than 500 number of times. Compared with Examples 1-8, there are significant differences between the test results of various parameters, and when the parameters are in the preferred range, the performance is considerably optimized.

### 3. Comparative Examples 4~5 are compared with Examples 1~3:

When W1 or W2 in Comparative Example 4 or 5 does not meet the preferred range, the metal exposure rate is also relatively high, indicating that the penetration of carbon into lithium manganese iron phosphate is not uniform. Moreover, the gram capacity is lower than 140 mAh/g, and the DCR is higher than 130 and the cycle life is only around 600 number of times. As compared with Examples 1~3, the test results of Comparative Examples 4~5 are relatively worse.

### 4. Comparative Example 6 is compared with Examples 3~5:

When the metal exposure rate, W1 and W2 in Comparative Example 6 are within the preferred range, but ratio of W1/W2 is not within the set value range of the present disclosure, it is shown that the penetration of carbon is not uniform, the gram capacity is lower than 140, the DCR is higher than 130 and the cycle life is less than 700 number of times; the overall performance is relatively poor. In Examples 3 to 5, by optimizing the ratio of W1/W2, the gram capacity may be increased by more than 140, the DCR is around 120, and the cycle life is maintained at 800 number of times and more, indicating a significant improvement. It is shown that on the basis that other parameters remain unchanged, ratio of W1/W2 adopting the set value range of the present disclosure may further improve the performance of the battery.

### 5. Comparative Example 6 is compared with other Comparative Examples:

The gram capacity, DCR and cycle life of Comparative Example 6 are all better than the results of other Comparative Examples. It can be indirectly explained that the metal exposure rate, W1 and W2 may further improve the performance of the battery while adopting the set value range of the present disclosure.

### 6. Comparative Examples 7~9 are compared with Examples 6~8:

When only one of W1, W2, and ratio of W1/W2 is in the preferred range, the metal exposure rate exceeds the preferred range, the carbon coating effect is relatively poor, and the performance of gram capacity, DCR and cycle life are all poor.

### 7. Comparative Examples 4~9 are compared with Comparative Examples 1~3 and 10:

Among metal exposure rate, W1, W2, ratio of W1/W2 in Comparative Examples 4~9, the value range of at least one parameter condition in the four parameters adopts the set value range of the present disclosure. In Comparative Examples 1~3, the value range of the four parameters is not with the set value range of the present disclosure. The gram capacity, DCR and cycle life of Comparative Examples 4-9 are all better than Comparative Examples 1-3 and 10. It is shown that among the metal exposure rate, W1, W2, and the ratio of W1/W2, when at least one of the four parameters adopts the set value range of the present disclosure, it is possible to improve the performance of the battery.

### Examples 9~11 and Comparative Examples 11~12

Part of the examples and the comparative examples of the present disclosure provide a preparation method of positive electrode material. According to the parameter condition shown in Table 4, firstly, polyethylene glycol, manganese sulfate, ferric nitrate, lithium carbonate, doping element and ammonium dihydrogen phosphate were mixed and dried, and then pre-sintered at the first temperature for 10 to 20 hours for pre-fusion. Then the temperature was increased to the second temperature and sintering was continued for 10-20 hours to obtain the positive electrode material. The prepared positive electrode material was further utilized to prepare a soft pack battery with a capacity of 1 Ah according to the battery preparation method of Examples 1-8. The gram capacity test, DCR test, and cycle test were carried out on the batteries obtained in the above-mentioned examples and comparative examples, respectively. The results are also shown in Table 4:

**Table 4 Effects of pre-sintering temperature on carbon content in positive electrode material, carbon coating effect and battery performance**

| | First temperatu re | Second temperatu re | Carbon source | Pₘₑ (%) | W1 (%) | W2 (%) | W1/W2 (%) | Gram capacity (mAh/g) | Cycle life at 45°C (number of times) |
|---|---|---|---|---|---|---|---|---|---|
| Comparat -ive Example 11 | 200°C /12h | 580°C /15h | Polyethylene glycol | 92 | 1.0 | 0.3 | 3.33 | 140 | 460 |
| Comparat -ive Example 12 | Not pre-sintered | 580°C /15h | Polyethylene glycol | 96 | 0.5 | 0.1 | 5.00 | 135 | 370 |
| Example 9 | 310°C /19h | 580°C /15h | Polyethylene glycol | 84 | 1.6 | 1.1 | 1.45 | 146 | 850 |
| Example 10 | 400°C /15h | 580°C /15h | Polyethylene glycol | 80 | 1.4 | 0.9 | 1.56 | 145 | 1030 |
| Example 11 | 480°C /11h | 580°C /15h | Polyethylene glycol | 79 | 1.8 | 1.3 | 1.38 | 147 | 960 |

The results show that: In Comparative Examples 11 and 12, if the pre-sintering temperature is lower than 300°C or no pre-sintering is carried out, even if the sintering temperature meets the requirements, the carbon coating effect of the positive electrode material is poor, the carbon content and ratio of carbon do not meet the requirements of the present disclosure, the gram capacity of the battery is relatively low, the cycle life is less than 500 number of times, and the overall performance of the battery is relatively poor. In Examples 9 to 11, other conditions remain unchanged, when the pre-sintering temperature is increased while the pre-sintering temperature adopts the set value range of the present disclosure, the obtained positive electrode material has an improved carbon coating effect, the carbon content and carbon ratio all meet the set values of the present disclosure, the battery gram capacity is improved, the cycle life is increased to 800 number of times or more, and even reach 1000 number of times or more, and the overall performance of the battery is improved.

### Examples 12~14 and Comparative Example 13

Part of the examples and the comparative examples of the present disclosure provide a preparation method of positive electrode material. According to the parameter condition shown in Table 5, firstly, carbon source, manganese nitrate, ferric chloride, lithium carbonate, doping elements and diammonium hydrogen phosphate were mixed and dried, and then pre-sintered at the first temperature for 10 to 20 hours for pre-fusion. Then the temperature was increased to the second temperature and sintering was continued for 10-20 hours to obtain the positive electrode material. The prepared positive electrode material was further utilized to prepare a soft pack battery with a capacity of 1 Ah according to the battery preparation method of Examples 1-8. The gram capacity test, DCR test, and cycle test were carried out on the batteries obtained in the above-mentioned examples and comparative examples, respectively. The results are also shown in Table 5:

**Table 5 Effects of organic carbon source and inorganic carbon source on the carbon content of positive electrode materials, carbon coating effect and battery performance**

| | First temperatu re | Second temperatu re | Carbon source | Pₘₑ (%) | W1 (%) | W2 (%) | W1/W2 (%) | Gram capacity (mAh/g) | 70%SoC DCR(millio hms) |
|---|---|---|---|---|---|---|---|---|---|
| Comparat -ive Example 13 | 400°C /15h | 510°C /18h | Acetylene black | 93 | 0.8 | 0.4 | 2.00 | 138 | 143 |
| Example 12 | 400°C /15h | 510°C /18h | Acetylene black | 85 | 1.5 | 1.2 | 1.25 | 144 | 122 |
| Example 13 | 400°C /15h | 510°C /18h | polyethyle -ne glycol | 83 | 1.4 | 1.2 | 1.17 | 148 | 119 |
| Example 14 | 400°C /15h | 510°C /18h | sucrose | 76 | 1.7 | 1.4 | 1.21 | 145 | 112 |

The result shows that, in comparison between Examples 12-14 and Comparative Example 13, in the positive electrode material obtained by using inorganic carbon source, the parameters related to carbon coating and carbon content fail to fall into the set value range of the present disclosure. Meanwhile, the overall performance of the battery is worse than that prepared by using the organic carbon source.

### Examples 15~17 and Comparative Example 14

Part of the examples and the comparative examples of the present disclosure provide a preparation method of positive electrode material. According to the parameter condition shown in Table 6, firstly, fructose, manganese chloride, iron nitrate, lithium carbonate, doping elements and ammonium monobasic phosphate were mixed and dried, and then pre-sintered at the first temperature for 10 to 20 hours for pre-fusion. Then the temperature was increased to the second temperature and sintering was continued for 10-20 hours to obtain the positive electrode material. The prepared positive electrode material was further utilized to prepare a soft pack battery with a capacity of 1 Ah according to the battery preparation method of Examples 1-8. The gram capacity test, DCR test, and cycle test were carried out on the batteries obtained in the above-mentioned examples and comparative examples, respectively. The results are also shown in Table 6:

**Table 6 Effects of sintering temperature on carbon content of positive electrode materials, carbon coating effect and battery performance**

| | First temperatu re | Second temperatu re | Carbon source | Pₘₑ (%) | W1 (%) | W2 (%) | W1/W2 (%) | 70%So C DCR (millioh ms) | Cycle life at 45°C (number of times) |
|---|---|---|---|---|---|---|---|---|---|
| Comparati -ve Example 14 | 310°C/19h | 400°C /20h | fructose | 94 | 0.7 | 0.2 | 3.50 | 148 | 540 |
| Example 15 | 310°C/19h | 510°C 118h | fructose | 83 | 1.3 | 1.0 | 1.30 | 125 | 880 |
| Example 16 | 310°C/19h | 580°C /15h | fructose | 78 | 1.6 | 1.5 | 1.07 | 116 | 930 |
| Example 17 | 310°C/19h | 640°C /12h | fructose | 71 | 1.6 | 1.4 | 1.14 | 114 | 960 |

The result shows that: Comparing Examples 15-17 with Comparative Example 14, when the sintering temperature is within the set value range of the present disclosure, the higher the temperature, the better the battery performance; when the sintering temperature does not adopt the set value range of the present disclosure, the battery performance is relatively poor.

It should be noted that the test results of the above examples are only to illustrate the obvious advantages of the positive electrode material of the present disclosure under the same conditions, and the results of the battery test do not represent the optimal test results of the battery prepared by the positive electrode material of the present disclosure.

### REFERENCE SIGNS LIST

1: core body
2: fusion layer
3: coating layer
d2: thickness of fusion layer
d3: thickness of coating layer

## Claims

1. A positive electrode material, comprising:
a lithium manganese iron phosphate, wherein a chemical formula thereof is LiₐMnₓFe_{1-x-y}M_{y}PO₄, wherein 0.9<a<1.10, 0≤x≤1.0, 0≤y≤0.02, 0.5≤x/(1-x-y)≤0.9, M is a doped element and selected from one or more of Ti, Mg, Ni, Co, Al, V, Cr, Zr, and Nb;
a carbon, which is coated on a surface of a particle of the lithium manganese iron phosphate,
wherein the carbon accounts for 1.4% to 4.7% of a total mass of the positive electrode material.

2. The positive electrode material according to claim 1, wherein the carbon is coated on the surface of the particle of the lithium manganese iron phosphate, and a core body (1) composed of the lithium manganese iron phosphate, a fusion layer (2) of the lithium manganese iron phosphate fused with the carbon, and a coating layer (3) composed of the carbon are formed from the inside out.

3. The positive electrode material according to claim 2, wherein a thickness ratio of the fusion layer (2) to the coating layer (3) is (10-15):(5-10).

4. The positive electrode material according to claim 2 or 3, wherein a proportion of the carbon at a first depth from a surface of the coating layer (3) is 1.2%≤W1≤2.3%, and the first depth is within a range of the fusion layer (2).

5. The positive electrode material according to claim 4, wherein a proportion of the carbon at a second depth from the surface of the coating layer (3) is 0.8%≤W2≤1.8%, and the second depth is within the range of the fusion layer (2), the second depth is greater than the first depth.

6. The positive electrode material according to claim 5, wherein a ratio of the proportion of the carbon at the first depth from the surface of the coating layer (3) to the proportion of the carbon at the second depth is 1.05≤W1/W2≤1.8.

7. The positive electrode material according to claim 6, wherein the first depth is a segment between 5nm and 20nm from the surface of the coating layer (3).

8. The positive electrode material according to claim 6, wherein the second depth is a segment between 90nm and 100nm from the surface of the coating layer (3).

9. The positive electrode material according to claim 1, wherein a metal exposure rate Pₘₑ after the surface of the particle of the lithium manganese iron phosphate is coated with the carbon is 68%≤Pₘₑ≤88%, and the metal exposure rate Pₘₑ= nₘₑ/nₜₒₗ, wherein nₘₑ is a total molar amount of all metal elements at the surface of the particle of the lithium manganese iron phosphate, wherein nₜₒₗ is a total molar amount of all elements at the surface of the particle of the lithium manganese iron phosphate.

10. A method for preparing a positive electrode material, wherein after mixing and drying a carbon source, a manganese source, a lithium source, an iron source, a doping element and a phosphorus source, performing pre-sintering and pre-fusion at a first stage temperature, then increasing the first stage temperature to a second stage temperature to continue sintering to obtain the positive electrode material; and/or the first stage temperature is 300-500°C, and a pre-sintering time is 10-20 hours;
and/or the second stage temperature is 500-650°C, and a sintering time is 10-20 hours.

11. The method for preparing the positive electrode material according to claim 10 wherein the carbon source is selected from one or more of glucose, fructose, polyethylene glycol, and sucrose;
and/or the manganese source is one or more of manganese sulfate, manganese nitrate, manganese chloride;
and/or the iron source is one or more of ferric nitrate and ferric chloride;
and/or the phosphorus source is one or more of ammonium dihydrogen phosphate and diammonium hydrogen phosphate;
and/or the doping element is selected from sulfate, nitrate or chloride salt of the corresponding doping element;
and/or the lithium source is lithium carbonate.

12. A positive electrode sheet, having a raw material comprising the positive electrode material according to any one of claims 1-9.

13. A positive electrode sheet, having a raw material comprising the positive electrode material obtained by using the preparation method according to claim 10 or 11.

14. A lithium ion battery, having the positive electrode sheet according to claim 12 or 13.

15. A lithium ion battery pack, having the lithium ion battery according to claim 14.
